# EUROPÄISCHE PATENTANMELDUNG

(11) **EP 1 786 084 A2**
(43) Veröffentlichungstag der Anmeldung: **16.05.2007**
(21) Anmeldenummer: 06123553.7
(22) Anmeldetag: 06.11.2006
(51) Int. Cl.: H02J 7/00, H02J 7/02

(54) **Verfahren und Schaltung zum Angleichen des Ladezustandes in Reihe hintereinander geschalteter Akkuzellen**

(30) Priorität: 11.11.2005 DE 102005054318
(71) Anmelder: Schulze Elektronik GmbH, 64331 Weiterstadt-Braunshardt (DE)
(72) Erfinder: Schulze, Matthias, 64331 Weiterstadt-Braunshardt (DE)
(74) Vertreter: Seiffert, Klaus

(57) **Zusammenfassung**

Die vorliegende Erfindung betrifft ein Verfahren zum Angleichen des Ladezustandes in Reihe hintereinander geschalteter Akkuzellen, die mit individuellen Spannungsabgriffen ausgestattet sind, wobei die einzelnen Zellen in Abhängigkeit von ihrem aktuellen Ladezustand mit einem Lade- bzw. Ausgleichsstrom versorgt werden. Des weiteren betrifft die Erfindung eine entsprechende Schaltung, wobei eine Einrichtung für eine individuelle Zufuhr von Ladestrom bzw. -spannung für jede der individuellen Akkuzellen vorgesehen ist. Um ein Verfahren zum Angleichen des Ladezustandes von in Reihe hintereinandergeschalteten Akkuzellen sowie eine entsprechende Schaltung zu schaffen, welche in der Lage sind, mit erheblich geringeren Energieverlusten den Ladezustand der Akkuzellen einander anzugleichen und welche darüber hinaus vorzugsweise auch ein Angleichen des Ladezustandes ohne äußere Stromquelle bei nur geringen Gesamtenergieverlusten ermöglichen, wird hinsichtlich des Verfahens vorgeschlagen, daß der Ausgleichsstrom von mindestens einem Übertrager individuell für jede Akkuzelle bereitgestellt wird. Hinsichtlich der Schaltung wird vorgeschlagen, daß die Einrichtung mindestens einen Übertrager mit je einer individuell jeder Akkuzelle zugeordneter Sekundärinduktivität aufweist, über welche jede der Akkuzellen mit individueller Spannung bzw. individuellem Strom beaufschlagbar ist.

## Beschreibung

Die vorliegende Erfindung betrifft ein Verfahren zum Angleichen des Ladezustandes in Reihe hintereinandergeschalteter Akkuzellen, die mit individuellen Spannungsabgriffen ausgestattet sind, wobei die einzelnen Zellen in Abhängigkeit von ihrem Ladezustand mit einem unterschiedlichen Ladestrom versorgt werden.

Ebenso betrifft die vorliegende Erfindung auch eine Schaltung zum Angleichen des Ladezustandes von in Reihe hintereinandergeschalteten Akkuzellen, die individuelle Spannungsabgriffe aufweisen, wobei eine Einrichtung für eine individuelle Anpassung der Zufuhr von Ladestrom bzw. -spannung für jede der individuellen Akkuzellen vorgesehen ist.

Entsprechende Verfahren und Schaltungen, die auch als "Balancerschaltung" oder "Equalizer-Schaltung" bezeichnet werden, sind aus dem Stand der Technik bekannt. Derartige Verfahren und Ausgleichsschaltungen dienen vor allem dem Zweck, die in einem Akkupack, welches aus einer Reihe hintereinander (und gegebenenfalls zusätzlich auch parallel geschalteter) Akkuzellen besteht, gespeicherte Energie möglichst gleichmäßig auf alle hintereinandergeschaltete Akkuzellen zu verteilen, damit die insgesamt in dem Akkupack vorhandene Energie möglichst vollständig bei der Nennspannung des Akkupacks entnommen werden kann.

Ansonsten kann es bei ungleichmäßig geladenen und in Reihe hintereinandergeschalteten Akkuzellen geschehen, daß eine oder mehrere am geringsten geladene Akkuzelle(n), die bei Stromentnahme aus dem Akku als erste entleert wird (werden), einen drastischen Spannungsabfall zeigt (zeigen), der auch die Spannung des gesamten Akkupacks entsprechend reduziert. Da für viele Anwendungszwecke die elektrische Einrichtung, die durch den Akkupack mit Energie versorgt wird, auf eine bestimmte Nennspannung ausgelegt ist, kann dies dazu führen, daß die elektrische Einrichtung nicht mehr ordnungsgemäß funktioniert, in ihrer Leistung erheblich absinkt oder abschaltet, obwohl ein Großteil der Akkuzellen noch eine genügende Menge gespeicherter elektrischer Energie für einen ordnungsgemäßen Betrieb der nachgeschalteten Einrichtung abgeben könnte, jedoch eine oder ein Teil der Zellen bereits leer ist und hierfür keine hinreichende Spannung mehr bereitstellt.

Dies kann nicht nur zu einer Tiefentladung einzelner Zellen führen, deren Kapazität dadurch erheblich abnehmen kann, sondern kann auch zur Zerstörung der Zelle(n) führen. Der ungleiche Ladezustand prinzipiell gleicher und gleich aufgebauter Akkuzellen kann insbesondere durch eine ungleichmäßige Selbstentladung der einzelnen Zellen hervorgerufen werden, da die Zellen sich in dieser Hinsicht oft sehr unterschiedlich verhalten, auch wenn Typ, Kapazität und Nennspannung identisch sind. Ein Angleichen des Ladezustandes ist deshalb für den Erhalt der vollen Akkukapazität und auch für die optimale Ausnutzung der gespeicherten Energie für besondere Anwendungsfälle von großer Bedeutung, vor allem, wenn ein Akku bzw. Akkupack längere Zeit unbenutzt geblieben ist.

Ein verbreiteter Anwendungsfall ist beispielsweise die Modellbauelektronik. Modellfahrzeuge werden häufig mit Elektromotoren angetrieben. Um Modellbaufahrzeuge und insbesondere Modellbauflugzeuge besonders leistungsfähig und wettbewerbstauglich zu machen, werden diese Modelle bzw. Flugzeuge mit Hochleistungs-Akkupacks ausgestattet, die zumeist aus mehreren Gruppen in Reihe hintereinandergeschalteter Akkuzellen bestehen, wobei jede Gruppe ihrerseits wiederum aus mehreren parallelgeschalteten Akkuzellen bestehen kann.

Bei Leistungsschauen und Wettbewerbsveranstaltungen kommt es häufig darauf an, daß die entsprechenden Fahrzeuge oder Flugzeuge bei gegebener Größe maximale Leistungen über einen möglichst langen Zeitraum erbringen, der dem vollen Energiegehalt des Akkus entspricht. Dabei kommt es zum einen darauf an, daß die entsprechenden Akkus eine möglichst große Energiemenge bei möglichst geringem Eigengewicht speichern, wobei zur Erzielung der maximalen Leistung und insbesondere einer maximalen Betriebsdauer selbstverständlich auch eine vollständige Ausnutzung der in dem Akku gespeicherten Energie notwendig ist, was voraussetzt, daß sich alle Akkuzellen identisch verhalten und die gespeicherte Energie in gleichem Maße abgeben.

Andererseits ist zu Beginn eines Ladevorgangs bei einem solchen Akkupack, der aus Gruppen hintereinandergeschalteter Zellen besteht, bei welchen jede der hintereinandergeschalteten Gruppen ihrerseits aus parallelen Akkuzellen bestehen kann, aufgrund gewisser Toleranzen in den Eigenschaften der einzelnen Akkuzellen der Ausgangszustand der Zellen bzw. Gruppen von Zellen oft unterschiedlich. Die Verfahren und Schaltungen zum Angleichen des Ladezustandes dienen dann dazu, die einzelnen Zellen oder Gruppen von Zellen, die einen geringeren Ladezustand aufweisen, nachzuladen, ohne jedoch die bereits weiter oder vollständig geladenen Zellen zu überladen und dadurch womöglich zu beschädigen oder zu zerstören.

Die meisten derartigen Verfahren und Schaltungen sehen deshalb vor, an den individuellen Spannungsabgriffen jeder der Zellen eine Spannungsmesseinrichtung anzuschließen und gleichzeitig auch Widerstände und/oder Transistoren parallel zu den Abgriffen jeder Zelle zu schalten, wobei in Abhängigkeit von der gemessenen Spannung, die den Ladezustand der Zelle reflektiert, die jeweilige parallel zu der Zelle geschaltete Belastungseinrichtung ein- oder ausgeschaltet wird, um beispielsweise bei einer vollgeladenen Zelle den von dem Ladegerät gelieferten Strom an der Zelle vorbei und durch die Belastungseinrichtung hindurchzuleiten, oder durch Sperren der Belastungseinrichtung diesen parallelen Pfad zu blockieren, so daß die Zelle weiter geladen wird.

Eine entsprechende Belastungseinrichtung kann beispielsweise aus einem Widerstand, (oder zur Verteilung der Verlustleistung auch aus mehreren Widerständen,) bestehen, die durch Relais oder Halbleiterschalter (z. B. bipolare Transistoren, Mosfets, GTOs) ein- und ausgeschaltet werden können. Die Belastungseinrichtung könnte darüber hinaus auch aus stromvariabel arbeitenden Stromsenken bestehen.

Bei diesem Verfahren und entsprechenden Schaltungen wird also ein Ladestrom nur oder überwiegend den schwächer geladenen Zellen aufgeprägt, und sie werden z. B. einfach entsprechend länger geladen als die übrigen Zellen, während der volle Gesamtladestrom weiterhin für den Gesamtakku bereitgestellt wird, an den bereits vollen oder nahezu vollen Zellen jedoch über eine Belastungseinrichtung vorbeigeleitet und nur über die weniger geladenen Zellen bzw. durch diese hindurch geführt wird.

Der nicht zum Laden der bereits vollständig geladenen Zellen verwendete Strom wird dabei in Verlustwärme umgewandelt. Durch derartige Verfahren und Vorrichtungen wird unnötig Energie verbraucht, was insbesondere dann von Nachteil ist, wenn eine Hauptstromquelle nur begrenzt Energie zur Verfügung stellen kann. Dies ist zum Beispiel der Fall, wenn entsprechende Ladegeräte bzw. Ausgleichschaltungen mit einer Autobatterie betrieben werden, wie es im Fall der bereits erwähnten Modellbauelektronik sehr häufig der Fall ist, wenn die Akkus der entsprechenden Modelle irgendwo im freien Gelände und weit ab von einer Versorgung durch das öffentliche Stromnetz aufgeladen werden müssen.

Gegenüber diesem Stand der Technik liegt der vorliegenden Erfindung die Aufgabe zugrunde, ein Verfahren zum Angleichen des Ladezustandes von in Reihe hintereinandergeschalteten Akkuzellen sowie eine entsprechende Schaltung mit den eingangs genannten Merkmalen zu schaffen, welche in der Lage sind, mit erheblich geringeren Energieverlusten den Ladezustand der Akkuzellen einander anzugleichen und welche darüber hinaus vorzugsweise auch ein Angleichen des Ladezustandes ohne äußere Stromquelle bei nur geringen Gesamtenergieverlusten ermöglichen. Wünschenswert wäre außerdem ein kompakter leichter und nach Möglichkeit preisgünstiger Aufbau einer solchen Schaltung, da zumindest einige der auf dem Markt erhältlichen Ausgleichsschaltungen sehr voluminös und, bezogen auf ihre Ausgleichsleistung, relativ teuer sind.

Hinsichtlich des oben erwähnten Verfahrens wird diese Aufgabe dadurch gelöst, daß der Ausgleichsstrom für die Akkuzellen von mindestens einem Übertrager individuell an die Akkuzellen geliefert wird.

Unter einem Übertrager versteht man im allgemeinen zwei getrennte, über magnetische Induktion miteinander gekoppelte Induktivität (Spulen), die primärseitig im allgemeinen nicht mit dem Wechselstrom des öffentlichen Netzes betrieben werden, sondern die primärseitig eine Gleichstromversorgung aufweisen, die aber mit einer prinzipiell beliebig wählbaren Frequenz getaktet werden, so daß effektiv ein frei getakteter Wechselstrom der Induktivität bzw. Spule der Primärseite zugeführt werden kann, der für eine induktive Übertragung von Energie erforderlich ist.

Die Energiezufuhr bzw. Energieübertragung kann dabei in sehr einfacher Weise über das Tastverhältnis eines entsprechenden Taktgebers eingestellt werden.

Dabei sind grundsätzlich zwei verschiedene Typen von Übertragern bekannt, nämlich die sogenannten Sperrwandler und die Durchflußwandler. Bei einem Sperrwandler wird während der Durchlassphase Energie im Übertrager gespeichert und in der Sperrphase an die Sekundärseite abgegeben. Da zwischen Primär- und Sekundärkreis kein direkter (zeitgleicher) Energiefluß stattfindet, kann sekundärseitig ohne Zwischenschaltung einer Drossel der Strom (zur Glättung) direkt auf einen Kondensator geleitet werden, wobei im Falle der vorliegenden Schaltung auch auf einen solchen Kondensator verzichtet werden kann, da die einzelnen Akkuzellen selbst als große Kondensatoren wirken, was die Schaltung mit einem Sperrwandler insgesamt sehr einfach und kostengünstig macht. Ein Durchflusswandler, bei welchem der Energiefluß zwischen Primär- und Sekundärseite während der Durchlassphase des getakteten Schalttransistors stattfindet, ist ebenfalls verwendbar. Erfindungsgemäß können beide Varianten eines Übertragers verwendet werden und es ist schließlich auch möglich, wenn es beispielsweise darum geht, in möglichst kurzer Zeit möglichst viel Energie zu übertragen, einen Übertrager zu verwenden, der als kombinierter Sperr- und Durchflußwandler arbeitet. Andere oder komplexere Arten von Schaltnetzteilen bzw. Übertragern könnten ebenfalls verwendet werden, wobei die oben genannten Typen aus Kostengründen und wegen des geringen schaltungstechnischen Aufwands, den sie erfordern, bevorzugt sind.

Dabei hat der Sperrwandler bei der Verwendung als individuelle Stromversorgung einzelner Akkuzellen den Vorteil eines einfacheren sekundärseitigen Spannungsaufbaus, da zwischen dem Sperrwandler und der Akkuzelle lediglich eine einfache Gleichrichterdiode angeordnet werden muß. Ein Durchflußwandler benötigt hingegen für den erfindungsgemäßen Einsatz auf der Ausgangsseite noch eine Freilaufdiode und eine Glättungsdrossel.

In einer bevorzugten Ausführungsform der Erfindung wird die Spannung der einzelnen Akkuzellen vorzugsweise während des Ladevorganges, im unbelasteten Zustand oder auch während einer Stromentnahme gemessen und es wird in Abhängigkeit von dem gemessenen Spannungswert ein der jeweiligen Akkuzelle individuell zugeordneter Übertrager entsprechend angesteuert. Die Ansteuerung erfolgt über einen geeignet programmierten Mikroprozessor. Die erfindungsgemäße Angleicherschaltung und das erfindungsgemäße Verfahren können also zum Beispiel parallel zu und während eines Ladevorganges verwendet werden. Auf diese Weise werden diejenigen Akkuzellen, die einen schwächeren Ladezustand aufweisen, mit einem zusätzlichen bzw. größeren Ladestrom versorgt als die übrigen Zellen. Anstelle eines jeder Zelle individuell zugeordneten Übertragers, könnte auch ein einzelner Übertrager für mehrere Akkuzellen vorgesehen werden und im Zeitmultiplex auf die einzelnen Akkuzellen durch Relais oder Halbleiterschalter aufgeschaltet werden, wobei durch eine entsprechende Programmierung die schwächer geladenen Zellen bevorzugt werden könnten und voll geladene Zellen oder Zellen mit dem jeweils besten Ladezustand übersprungen werden könnten. Die jeweiligen Zeitfenster eines solchen Zeitmultiplexverfahrens müßten dabei im Unterschied zu anderen herkömmlichen Zeitmultiplexverfahren, beispielsweise im Bereich Datenverarbeitung, nicht notwendigerweise im Millisekundenbereich oder darunter liegen, sondern könnten jeweils mehrere Sekunden oder auch Minuten betragen. Dies würde zwar den Zeitaufwand für das Angleichen des Ladezustandes der Zellen unter Umständen etwas vergrößern, bedeutet aber gleichzeitig eine Reduzierung der Anzahl der benötigten Bauteile und insbesondere der relativ teuren Übertrager. Alternativ könnten bei einer anderen Ausführungsform auch mehrere Übertrager vorgesehen sein, deren Zahl jedoch deutlich kleiner als die Zahl der anzugleichenden Akkuzellen wäre und die jeweils eine Gruppe von Zellen im Zeitmultiplex anzugleichen hätten. Dabei könnte die Gruppengröße und Zuordnung von Zellen zu Übertragern entsprechend dem Bedarf dynamisch variiert werden.

Das Verfahren und die Schaltung können im Gegensatz zu den bekannten Verfahren und Schaltungen nach dem Stand der Technik nicht nur während eines laufenden Ladevorgangs, sondern auch im Anschluß an einen zuvor abgeschlossenen Ladevorgang angewendet werden, der beispielsweise beendet wurde, nachdem mindestens ein Teil der Zellen einen vollständigen geladenen Zustand erreicht hat oder nachdem ein Überladeschutz den Ladevorgang abgebrochen hat.

Schließlich ist es insbesondere auch möglich, in einem beliebigen (teilgeladenen) Zustand des Akkupacks die Spannung des gesamten Akkupacks als primärseitige Spannungsversorgung des Übertragers oder der Übertrager und der ansteuernden Elektronik zu verwenden. Auf diese Weise wird dem gesamten Akkupack und damit allen Zellen gleichmäßig Energie entzogen und über die Übertrager bevorzugt in die noch nicht vollständig bzw. schwächer geladenen Zellen zurückgeführt, bis alle Zellen einen gleichmäßigen Ladezustand aufweisen. Damit ist es also insbesondere möglich, auch unabhängig von einer externen Stromversorgung den Ladezustand der Zellen eines Akkupacks auszugleichen und somit beim anschließenden Gebrauch unter zeitlich maximalem Erhalt der Nennspannung eine maximale Energieausnutzung des gesamten Akkupacks zu ermöglichen.

Darüber hinaus ist ein Angleichverfahren bevorzugt, bei welchem der mindestens eine Übertrager mit einer Taktfrequenz von mindestens 5 kHz, vorzugsweise mindestens 10 kHz und insbesondere 20 kHz oder mehr angesteuert wird. Die Ansteuerung mit hoher Frequenz ist dabei gleichbedeutend mit der Verwendung kleinerer und kompakterer Bauteile und ermöglicht somit eine Angleicherschaltung, die insgesamt ein sehr günstiges Verhältnis von übertragener Leistung zu Größe und Gewicht der Schaltung aufweist. Insbesondere für kleine Leistungen bzw. Ausgleichsströme unter 5 Ampere (z. B. 2 A) können bei entsprechend hoher Taktfrequenz von z. B. 150 kHz sehr kleine, für diese Frequenz und diesen Leistungsbereich ausgelegte Bauteile verwendet werden, was die gesamte Schaltung sehr kompakt und gleichzeitig in der Herstellung kostengünstig macht.

Bei einer alternativen, bevorzugten Ausführungsform der Erfindung ist vorgesehen, daß anstelle individueller Übertrager für jede Zelle, als Übertrager für alle oder zumindest mehrere Zellen ein magnetisch gekoppelter Übertrager verwendet wird, d.h. ein Übertrager, bei welchem primärseitig eine einzige Spule bzw. hintereinandergeschaltete Spulen mit gemeinsamem Magnetkern vorgesehen ist bzw. sind, während sekundärseitig eine Anzahl identischer Spulen mit individuellen Spannungsabgriffen vorgesehen ist, die der maximalen Anzahl der anzugleichenden, hintereinander geschalteten Akkuzellen entspricht. Bei einem solchen magnetisch gekoppelten Übertrager, bei welchem der Magnetfluß durch alle sekundärseitigen Spulen der gleiche ist, werden, da somit an allen sekundärseitigen Anschlüssen der Spulen die gleiche Spannung bereitgestellt wird, bevorzugt oder ausschließlich diejenigen Akkuzellen mit einem zusätzlichen Ladestrom versorgt, die eine geringere Spannung aufweisen; wohingegen von den Sekundärspulen, deren Spannung mit der Zellenspannung nahezu übereinstimmt, praktisch keine Energie (bzw. Ladestrom) in die Zelle fließt. Es wird also automatisch und ohne speziell zu programmierende, spannungsabhängige Ansteuerung des magnetisch gekoppelten Übertragers der weitaus größte Teil der übertragenen Energie jeweils der Zelle mit der geringsten Spannung zugeführt. Die Zahl der primärseitigen Bauteile wird dadurch ebenfalls erheblich reduziert, während allerdings der magnetische gekoppelte Übertrager im Vergleich zu den individuellen Übertragern der vorher beschriebenen Ausführungsform an sich ein aufwendigeres Bauteil ist

Hinsichtlich der eingangs genannten Schaltung zum Angleichen des Ladezustandes von in Reihe hintereinandergeschalteten Akkuzellen wird die der Erfindung zugrunde liegende Aufgabe dadurch gelöst, daß die Einrichtung für eine individuelle Zufuhr von Ladestrom bzw. -spannung mindestens einen Übertrager mit einer individuell jeder Akkuzelle zugeordneten Sekundärinduktivität aufweist, über welche jede der Akkuzellen mit individueller Spannung bzw. individuellem Strom beaufschlagbar ist.

Die sich hieraus ergebenden Vorteile entsprechen denjenigen, die bereits in Verbindung mit dem erfindungsgemäßen Verfahren erläutert wurden. Der Übertrager ist entweder ein Sperrwandler oder ein Durchflußwandler und kann, falls dies gewünscht ist, auch als kombinierter Sperr- und Durchflußwandler ausgebildet sein.

In einer Ausführungsform ist eine Einrichtung zum Messen der Spannung der individuellen Akkuzellen vorgesehen, die es nach entsprechender Auswertung der gemessenen Spannung ermöglicht, die einzelnen Zellen individuell mit zusätzlichem Ladestrom bzw. Ausgleichsstrom zu versorgen.

In der bevorzugten Ausführungsform ist die Einrichtung zum Messen der Spannung eine integrierte Schaltung, insbesondere ein Mikroprozessor, der z. B. über (einen) integrierte(n) AD-Wandler die gemessenen Spannungen auswertet und unmittelbar auch die Taktgeber für die einzelnen, je einer Zelle zugeordneten Übertrager entsprechend ansteuert. Die individuell zu übertragende elektrische Energie kann durch den entsprechend programmierten Mikroprozessor in einfacher Weise über das Tastverhältnis des Ansteuerungstransistors bzw. MOSFETs des Übertragers eingestellt werden.

In einer anderen bevorzugten Ausführungsform wird ein magnetisch gekoppelter Übertrager verwendet. Ein solcher, magnetisch gekoppelter Übertrager hat den Vorteil, daß aufgrund der magnetischen Kopplung automatisch diejenige Zelle mit der geringsten Zellenspannung am stärksten geladen wird, so daß die Spannung der einzelnen Zellen nicht einmal gemessen zu werden braucht. Auch bei der Verwendung eines magnetisch gekoppelten Übertragers kann es allerdings zweckmäßig sein, allein zu Kontroll- und Überwachungszwecken die individuellen Spannungen der einzelnen Zellen dennoch zu messen, um beispielsweise eine Anzeige über den Ladezustand und den angeglichenen Zustand der einzelnen Zellen bereitstellen zu können und um zum Beispiel auch die insgesamt über den Übertrager zuzuführende Energie über die Ansteuerung auf der Primärseite einzustellen.

Weiterhin ist in der bevorzugten Ausführungsform der Erfindung eine Einrichtung vorgesehen, welche die Ausgangsanschlüsse des Akkupacks direkt oder über eine Netzteilschaltung wahlweise mit der Primärseite des Übertragers bzw. der Übertrager verbindet. Auf diese Weise ist es möglich, ohne externe Stromversorger und ohne nennenswerten Energieverlust den Ladezustand unterschiedlich geladener Zellen auszugleichen.

Es versteht sich, daß unter einer Zelle im Sinne der vorliegenden Erfindung gegebenenfalls auch mehrere parallelgeschaltete Zellen zu verstehen sind und daß, soweit von individuellen bzw. unterschiedlichen Zellen die Rede ist, immer nur in Reihe hintereinandergeschaltete Zellen gemeint sind, da parallelgeschaltete Zellen letztlich nichts anderes als einzelne Zellen mit entsprechend größerer Kapazität sind.

Ein besonderer Vorteil der vorliegenden Erfindung ergibt sich aus der Verwendung von Induktivitäten bzw. Übertragern als einen Ausgleichsstrom zur Verfügung stellende Elemente. Energie wird dadurch nahezu verlustfrei übertragen und es wird keinerlei Energie an volle Zellen oder parallel geschaltete Dissipatoren wie Widerstände oder dergleichen verschwendet. Überraschenderweise lässt sich eine solche Schaltung sogar relativ kompakt und zu wettbewerbsfähigen Preisen realisieren.

Denkbar wäre es auch, wenn die Angleicherschaltung nicht aus dem anzugleichenden Akkupack selbst sondern über eine externe Stromversorgung gespeist wird, diese Angleicherschaltung insgesamt als Ladegerät zu verwenden, auch wenn in einer konkreten Auslegung einer solchen Angleicherschaltung für einen bestimmten Kapazitätsbereich von Akkus die maximal zur Verfügung gestellten Ausgleichsströme in der Regel deutlich kleiner als die ansonsten verwendeten Ladeströme sein dürften. Dies läßt sich jedoch durch eine entsprechend längere Ladezeit ausgleichen, oder es spielt kein Rolle, wenn mit der Angleicherschaltung entsprechend kleinere Akkupacks geladen werden deren üblicher Ladestrom dem durch die Angleicherschaltung gelieferten Maximalstrom entspricht. Im Übrigen kann die Angleicherschaltung ohne weiteres auch für entsprechend größere Lade- bzw. Ausgleichsströme ausgelegt werden.

Weitere Vorteile, Merkmale und Anwendungsmöglichkeiten der vorliegenden Erfindung werden deutlich anhand der folgenden Beschreibung bevorzugter Ausführungsformen und der dazu gehörigen Figuren. Es zeigen:
- Figur 1: ein elektrisches Schaltbild mehrerer Baugruppen einer erfindungsgemäßen Schaltung, wobei die Baugruppen 1 und 2 alternativ verwendbar sind und
- Figur 2: ein elektrisches Schaltbild einer zweiten und dritten Ausführungsform der vorliegenden Erfindung, wobei wiederum die Baugruppen 11, 12, 21 und 22 alternativ verwendbar sind.

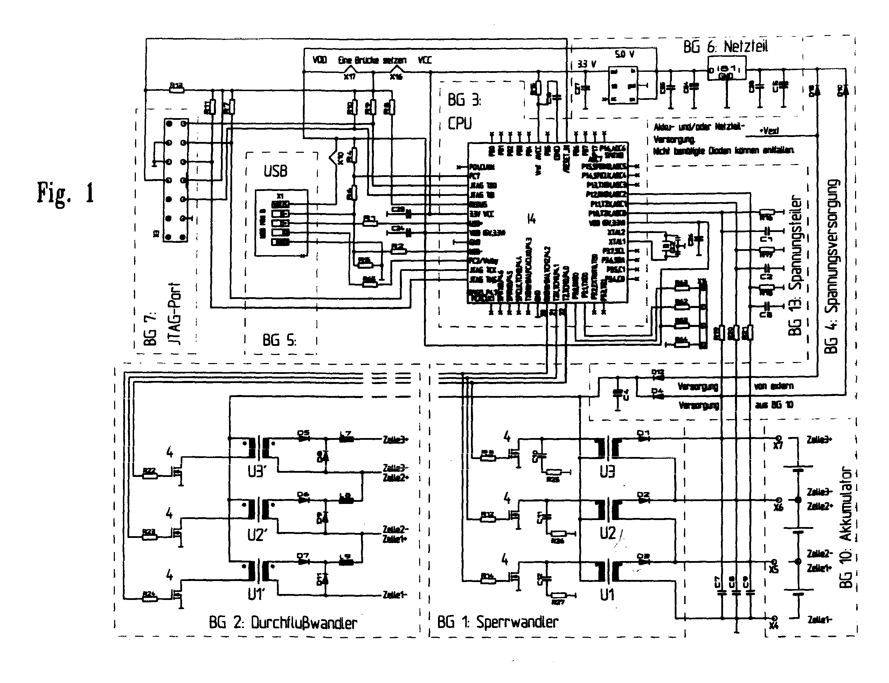

In Figur 1 erkennt man eine elektrische Schaltung, die (ohne den Akkupack BG 10) im wesentlichen aus sieben Baugruppen besteht, welche mit BG1 bis BG7 bezeichnet sind, wobei allerdings bei einer konkreten Schaltung nur eine der Baugruppen BG1 und BG2 alternativ zur Anwendung kommt. Dabei stellt die Baugruppe BG2 einen aus drei Übertragern bestehenden (dreifachen) Durchflußwandler da, während die Baugruppe BG1 einen ebenfalls aus drei getrennten Übertragern bestehenden (dreifachen) Sperrwandler zeigt. Der Sperrwandler gemäß der Baugruppe BG1 ist entsprechend der Anzahl der Übertrager mit drei in Reihe hintereinandergeschalteten Zellen eines Akkupacks verbunden. Der Akkupack mit den anzugleichenden Zellen ist als Baugruppe BG 10 bezeichnet.

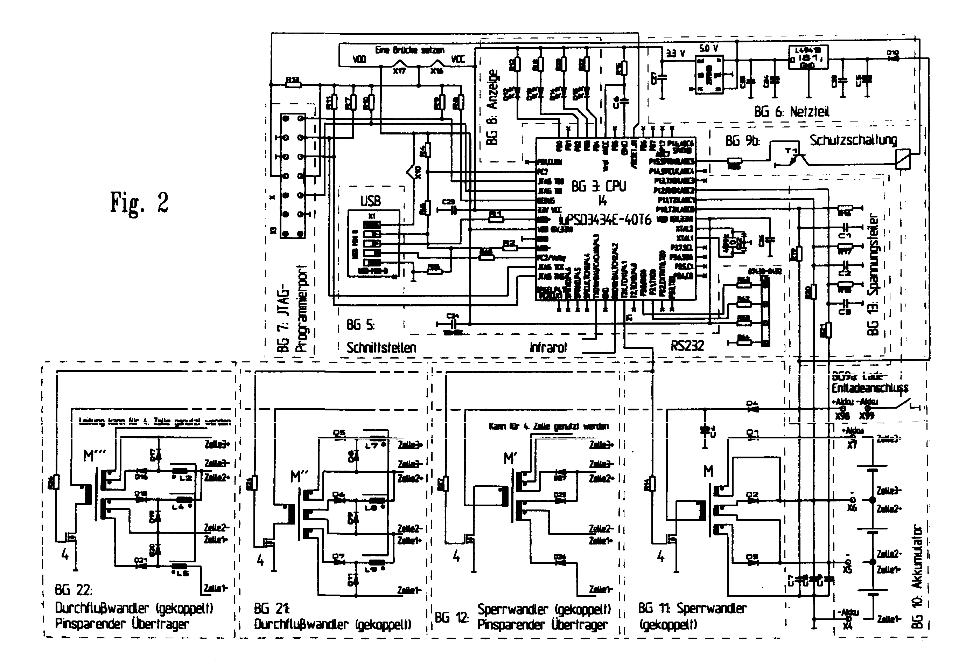

Es versteht sich, daß die Anzahl der Übertrager U₁ bis U₃ entsprechend der Anzahl der Zellen eines Akkus beliebig variiert werden kann, wobei Akkus mit einer beliebigen Zellenzahl bis hin zu einer durch die Gesamtzahl der Übertrager vorgegebenen maximalen Zahl in Reihe hintereinander geschalteter Zellen mit Hilfe der erfindungsgemäßen Schaltung im Ladezustand der einzelnen Zellen angeglichen werden können. Das heißt, für Akkus mit einer kleineren Zellenzahl wird einfach nur ein in der Regel zusammenhängender Abschnitt der zur Verfügung stehenden Spannungsausgänge der Schaltung benutzt. (Auch separate Abschnitte für entsprechende Gruppen von Zellen könnten verwendet werden.) In einer konkreten Ausführungsform der Erfindung sind im Gegensatz zu der vereinfachten Dachstellung in den Figuren 1 und 2 mindestens 6 und vorzugsweise sogar 14 Übertrager vorgesehen. Alternativ kann jedoch die Zahl der Übertrager auch geringer sein als die Zahl der anzugleichenden Akkuzelllen, wenn zusätzlich eine Zeitmultiplexschaltung zwischen dem bzw. den Übertrager(n) U und den Zellen des Akkus vorgesehen wird.

Die einzelnen Spannungsabgriffe X4, X5, X6 und X7 der individuellen Zellen 1 bis 3 sind mit Anschlüssen 34 bis 36 eines Mikroprozessors verbunden, der als Baugruppe BG3 bezeichnet ist. Der Mikroprozessor erfaßt diese Spannungen, wertet sie entsprechend einem im allgemeinen fest eingegebenen Softwareprogramm aus und steuert über Taktleitungen 20 bis 22 und einen dazwischengeschalteten Widerstand jeweils einen MOSFET 4, der primärseitig jedem Übertrager vorgeschaltet ist. Die bevorzugte Taktfrequenz liegt bei einer Ausführungsform der Erfindung bei zum Beispiel 150 kHz, wobei die konkret verwendeten Taktfrequenzen in weitem Umfang variieren können und unter anderem davon abhängen, welche maximalen Leistungen bzw. Maximalströme auf die einzelnen Akkuzellen übertragen werden sollen und welche Zugeständnisse dabei an die Größe der einzelnen Bauteile und hierzu aufzuwendenden Kosten gemacht werden. In einer bevorzugten Ausführungsform ist die erfindungsgemäße Schaltung für einen Maximalstrom von 1A oder 2A pro Zelle ausgelegt und hat dabei insgesamt äußerst kompakte Maße, so daß sie in einem Gehäuse von etwa 10 x 12 x 1,5 cm unterzubringen ist.

Die Baugruppe BG4 zeigt eine Spannungsversorgung für Gleichstrom, die entweder von dem anzugleichenden Akku selbst (BG10), von einem größeren Akku (zum Beispiel Autobatterie) oder einem Netzteil geliefert wird. Diese primäre Gleichspannung wird unter der Steuerung des Mikroprozessors BG3 and den MOSFET 4 der jeweiligen Übertrager Uᵢ (i = 1...n, wobei n die Gesamtzahl der Übertrager ist)) zugeführt, wobei die Windungsverhältnisse der Übertrager Uᵢ dem Verhältnis von Primärzu Sekundärspannung angepaßt sind. Die externe Spannungsversorgung liefert auch den erforderlichen Strom für den Betrieb der gesamten Schaltung, insbesondere des Mikroprozessors BG3.

Die Baugruppe BG5 enthält mindestens eine und vorzugsweise mehrere verschiedene Schnittstellen RS 232. Konkret eine USB und eine Infrarotschnittstelle. Die Baugruppe BG7 bezeichnet Programmieranschlüsse, hier einen JTAG-Port zum Programmieren, zu dem es allerdings auch andere Programmierschnittstellen als Alternativen gibt. Teilweise können über die Programmier- und die Schnittstelleneinheiten herstellerseitig bestimmte Programme und Verfahrensabläufe in den Mikroprozessor fest einprogrammiert bzw. aktualisiert werden (z. B. Ergänzung auf neue oder weitere Akkutypen), und zum anderen können über diese Einheit von einem Benutzer Einstellungen und Anpassungen an eine gegebene Situation vorgenommen werden, beispielsweise die Umstellung der Spannungsversorgung auf einen externen Akku oder eine Netzspannung oder die Umschaltung auf Primärspannung aus dem auszugleichenden Akkupacks selbst und/oder die Einstellung der maximalen Zellenspannung und/oder des Typs eines Akkus. Die konkrete Zellenzahl ergibt sich zwangsweise aus der Zahl der verwendeten Spannungsabgriffe, und kann in der jeweiligen Anwendung beliebig innerhalb der durch die Übertrager bzw. die zugehörige Schaltung vorgegebenen Maximalzahl variieren.

Die Baugruppe BG2 zeigt einen Durchflußwandler, der anstelle des Sperrwandlers der Baugruppe BG1 eingesetzt werden kann. Wie man sieht, unterscheiden sich Durchflußwandler und Sperrwandler im wesentlichen durch eine zusätzliche Freilaufdiode D8 (sowie D9 und D11) und eine Glättungsdrossel L7 (bzw. L8 und L9). Ansonsten ist das Funktionsprinzip der Schaltung mit Durchflußwandler dasselbe wie dasjenige mit Sperrwandler.

Figur 2 zeigt eine Ausführungsform der Erfindung, bei welcher in einer Variante ein nunmehr magnetisch gekoppelter Sperrwandler M, M' und in den anderen Varianten magnetisch gekoppelte Durchflußwandler M" - M'" verwendet werden. Primärseitig ist demzufolge nur eine einzige Spule vorhanden, die den gleichen magnetischen Fluß durch alle Sekundärspulen erzwingt, was bei unterschiedlichen Lasten an den Anschlüssen der Sekundärspulen dazu führt, daß die jeweils am schwächsten geladene Zelle mit dem größten Ausgleichsstrom versorgt wird. Wie man sieht, benötigt man in diesem Fall nur einen einzigen MOSFET 4 zum Takten der Primärspule und es ist außerdem nicht erforderlich, die einzelnen Spannungen der Akkuzellen zu messen, was aber andererseits allein zur Überwachung des Akkuzustands zweckmäßig und auch bevorzugt ist.

Die BG 11 zu 12 bzw. 21 zu 22 unterscheiden sich nicht elektrisch voneinander, sondern nur durch die physikalische Ausführung des Übertragertrafos. Durch die paarweise Zusammenlegung von Spulenanschlüssen ergibt sich in der Praxis bei hohen Zellenzahlen eine Ersparnis der erforderlichen Übertrageranschlüsse nach außen.

Figur 2 zeigt gegenüber Figur 1 einige weitere Baugruppen, wie zum Beispiel die Anzeige-Baugruppe BG8 und die Schutzschaltung BG9, die entweder nicht zwingend erforderlich sind und insofern nur mögliche Optionen aufzeigen, die auch in den Ausführungsformen nach Figur 1 vorhanden sein können, oder aber aus Gründen der einfacheren Darstellung und wegen der Konzentration auf das erfindungsgemäße Prinzip in Figur 1 nicht dargestellt sind. Umgekehrt gilt dies auch für einige in Figur 1 gezeigte Schaltungsteile, die in Figur 2 nicht dargestellt sind. Die Schutzschaltung BG9 kann beispielsweise den Ladestrom eines getrennten, an den Endanschlüssen des Akkupacks angeschlossenen Ladegeräts abschalteten, wenn mindestens eine der Zelle vollständig geladen ist und vor einer Überladung geschützt werden sollte. BG 13 ist ein Spannungsteiler, da die Akkuzellenspannung auf den zulässigen Eingangspannungsbereich der AD-Wandler (in diesem Fall in der BG3) reduziert werden muß.

Die Baugruppe BG 21 zeigt in Analogie zu dem magnetisch gekoppelten Sperrwandler der Baugruppe 11 einen entsprechenden, magnetisch gekoppelten Durchflußwandler, der sich wiederum nur durch die Freilaufdiode und Glättungsdrossel in den sekundärseitigen Zweigen von der Sperrwandlerschaltung unterscheidet.

## Patentansprüche

1. Verfahren zum Angleichen des Ladezustandes in Reihe hintereinander geschalteter Akkuzellen, die mit individuellen Spannungsabgriffen ausgestattet sind, wobei die einzelnen Zellen in Abhängigkeit von ihrem aktuellen Ladezustand mit einem Lade- bzw. Ausgleichsstrom versorgt werden, **dadurch gekennzeichnet, daß** der Ausgleichsstrom von mindestens einem Übertrager individuell für jede Akkuzelle bereitgestellt wird.

2. Verfahren nach Anspruch 1, **dadurch gekennzeichnet, daß** ein nach dem Prinzip eines Sperrwandlers arbeitender Übertrager verwendet wird.

3. Verfahren nach Anspruch 1, **dadurch gekennzeichnet, daß** ein nach dem Prinzip eines Durchflußwandlers arbeitender Übertrager verwendet wird.

4. Verfahren nach Anspruch 1, **dadurch gekennzeichnet, daß** ein Übertrager verwendet wird, der als kombinierter Sperr- und Durchflußwandler bzw. Halbbrückendurchflußwandler arbeitet.

5. Verfahren nach einem der Ansprüche 1 bis 4, **dadurch gekennzeichnet, daß** die Spannung der einzelnen Akkuzellen, während eines separaten Ladevorganges, im unbelasteten und/oder in einem belasteten Zustand gemessen, und in Abhängigkeit von dem gemessenen Spannungswert ein der jeweiligen Akkuzelle aktuell zugeordneter Übertrager angesteuert wird.

6. Verfahren nach einem der Ansprüche 1 bis 5, **dadurch gekennzeichnet, daß** der mindestens eine Übertrager mit einer Taktfrequenz von mindestens 5 kHz, vorzugsweise mindestens 10 und insbesondere mindestens 20 kHz angesteuert wird.

7. Verfahren nach Anspruch 6, **dadurch gekennzeichnet, daß** die Taktfrequenz über einen Mikroprozessor und/oder ein entsprechendes Steuerungsprogramm einstellbar ist.

8. Verfahren nach einem der Ansprüche 1 bis 5, **dadurch gekennzeichnet, daß** jede der hintereinander geschalteten Akkuzellen über je einen individuell zugeordneten Übertrager wahlweise mit einem Ausgleichsstrom versorgt wird.

9. Verfahren nach einem der Ansprüche 1 bis 4, **dadurch gekennzeichnet, daß** ein magnetisch gekoppelter Übertrager verwendet wird, wobei sekundärseitig jeder der hintereinander geschalteten Akkuzellen je eine Sekundärspule zugeordnet ist.

10. Verfahren nach einem der Ansprüche 1 bis 4, **dadurch gekennzeichnet, daß** als primärseitige Strom- bzw. Spannungsversorgung die Gesamtheit der anzugleichenden Akkuzellen verwendet wird.

11. Schaltung zum Angleichen des Ladezustandes von in Reihe hintereinander geschalteten Akkuzellen, die individuelle Spannungsabgriffe aufweisen, wobei eine Einrichtung für eine individuelle Zufuhr von Ladestrom bzw. -spannung für jede der individuellen Akkuzellen vorgesehen ist, **dadurch gekennzeichnet, daß** die Einrichtung mindestens einen Übertrager mit je einer individuell jeder Akkuzelle zugeordneter Sekundärinduktivität aufweist, über welche jede der Akkuzellen mit individueller Spannung bzw. individuellem Strom beaufschlagbar ist.

12. Schaltung nach Anspruch 11, **dadurch gekennzeichnet, daß** der Übertrager ein Sperrwandler ist.

13. Schaltung nach Anspruch 11, **dadurch gekennzeichnet, daß** der Übertrager ein Durchflußwandler ist.

14. Schaltung nach Anspruch 11, **dadurch gekennzeichnet, daß** der Übertrager ein kombinierter Sperr- und Durchflußwandler bzw. Halbbrückendurchflußwandler ist.

15. Schaltung nach einem der Ansprüche 11 bis 14, **dadurch gekennzeichnet, daß** die Anzahl der Übertrager der maximal durch die Schaltung anzugleichenden Anzahl hintereinander geschalteter Zellen entspricht.

16. Schaltung nach einem der Ansprüche 11 bis 14, **dadurch gekennzeichnet, daß** der Übertrager ein magnetisch gekoppelter Übertrager mit einer Anzahl von Sekundärspulen ist, die mindestens der maximal durch die Schaltung anzugleichenden Anzahl hintereinander geschalteter Zellen entspricht.

17. Schaltung nach einem der Ansprüche 11 bis 15, **dadurch gekennzeichnet, daß** eine Einrichtung zum Messen der Spannung der individuellen Akkuzellen vorgesehen ist.

18. Schaltung nach einem der Ansprüche 11 bis 17, **dadurch gekennzeichnet, daß** eine Einrichtung zum Ansteuern des mindestens einen Übertragers in Abhängigkeit von den an den jeweiligen Akkuzellen gemessenen Spannungswerten vorgesehen ist.

19. Schaltung nach einem der Ansprüche 11 bis 18, **dadurch gekennzeichnet, daß** mindestens eine Einrichtung zum Verbinden der Endanschlüsse des Akkupacks mit der Stromversorgungsseite der Schaltung und gegebenenfalls auch der Primärseite des mindestens einen Übertragers vorgesehen ist.

20. Schaltung nach einem der Ansprüche 11 bis 19, **dadurch gekennzeichnet, daß** die Zahl der Übertrager kleiner ist als die Zahl der maximal vorgesehenen, anzugleichenden Akkuzellen, wobei eine Zeitmultiplexschaltung vorgesehen ist, welche einen Übertrager jeweils für ein vorzugsweise dynamisch wählbares Zeitfenster mit einer Zelle aus einer Gruppe von Zellen, die dem Übertrager zugeordnet ist, verbindet.
